# EUROPEAN PATENT APPLICATION

(11) **EP 4 422 266 A1**
(43) Date of publication of application: **28.08.2024**
(21) Application number: 22882966.9
(22) Date of filing: 21.10.2022
(51) Int. Cl.: H04W 28/02

(54) **REPORT SENDING METHOD, TERMINAL, BASE STATION, APPARATUS AND STORAGE MEDIUM**

(30) Priority: 21.10.2021 CN 202111228460
(71) Applicant: Datang Mobile Communications Equipment Co., Ltd., Beijing 100085 (CN)
(72) Inventor: ZHOU, Rui, Beijing 100085 (CN); ZHOU, Ye, Beijing 100085 (CN)
(74) Representative: dompatent von Kreisler Selting Werner - Partnerschaft von Patent- und Rechtsanwälten mbB
(86) International application number: PCT/CN2022/126608
(87) International publication number: WO 2023/066361

(57) **Abstract**

Provided in the present application are a report sending method, a terminal, a base station, an apparatus and a storage medium. The method comprises: according to an identifier of a first MRB, which is configured by a target base station for a QoS flow of a target MBS service, determining an identifier of a second MRB, which is configured by a source base station for the QoS flow of the target MBS service; and by means of a packet data convergence protocol (PDCP) entity corresponding to the identifier of the second MRB, sending, to the target base station, a PDCP state report for the QoS flow of the target MBS service. In the embodiments of the present application, by means of using a PDCP entity which has been established for a first MRB of a source base station before switching, the release and establishment processes of a PDCP entity corresponding to a second MRB are prevented from being triggered during the switching to a target base station, thereby guaranteeing lossless transmission based on a PDCP state report, and guaranteeing the reliability of data transmission.

## Description

### CROSS-REFERENCE TO RELATED APPLICATION

The present application claims priority to Chinese patent application No. 202111228460.6 filed on October 21, 2021, entitled "Report Sending Method, Terminal, Base Station, Apparatus and Storage Medium", which is hereby incorporated by reference in its entirety.

### FIELD

The present application relates to the field of communication, particular to methods and apparatuses for transmitting a report, a terminal, a base station, and a storage medium.

### BACKGROUND

Packet data convergence protocol (PDCP) is an air interface protocol layer. When transmitting data, radio access network (RAN) nodes and terminals establish a PDCP entity for each radio bearer to process the transmitted data.

However, identities (ID) of multicast broadcast system radio bearer (MBS radio bearer, MRB) established by different RAN nodes for the quality of service (QoS) flow of the same MBS session are not the same, which means that in a handover scenario, the IDs of the MRB assigned by the source RAN node and the target RAN node for the same MBS session are different. Consequently, during handing over to the target RAN node, the terminal needs to trigger the release and establishment of the PDCP entity. If transmission is based on the source PDCP status report, it will result in the loss of MBS service data.

### SUMMARY

Embodiments of the present application provide methods and apparatuses for transmitting a report, a terminal, a base station, and a storage medium to solve the defect of MBS service data loss in the related art, ensuring lossless transmission based on packet data convergence protocol (PDCP) status report and the reliability of data transmission.

In an embodiment, a method for transmitting a report applied to a terminal device is provided, the method including:
determining an identity of a second multicast broadcast system radio bearer (MRB) configured by a source base station for quality of service (QoS) flow of a target multicast broadcast system (MBS) service based on an identity of a first MRB configured by a target base station for the QoS flow of the target MBS service; and
transmitting a packet data convergence protocol (PDCP) status report for the QoS flow of the target MBS service to the target base station through a PDCP entity corresponding to the identity of the second MRB.

In an embodiment, the transmitting the PDCP status report for the QoS flow of the target MBS service to the target base station through the PDCP entity corresponding to the identity of the second MRB includes:
receiving the QoS flow of the target MBS service through the PDCP entity corresponding to the identity of the second MRB; and
transmitting the PDCP status report generated by the PDCP entity corresponding to the identity of the second MRB to the target base station, where the PDCP status report includes QoS flow transmission information of the target MBS service.

In an embodiment, the method further including:
receiving a mapping relationship, transmitted from the source base station, between the identity of the first MRB configured by the target base station and the identity of the second MRB configured by the source base station,
where determining the identity of the second MRB configured by the source base station for the QoS flow of the target MBS service based on the identity of the first MRB configured by the target base station for the QoS flow of the target MBS service includes:
   determining the identity of the second MRB configured by the source base station for the QoS flow of the target MBS service based on the mapping relationship and the identity of the first MRB configured by the target base station for the QoS flow of the target MBS service.

In an embodiment, the method further including:
receiving a first mapping relationship and a second mapping relationship transmitted from the source base station, where the first mapping relationship includes a mapping relationship between the QoS flow of the target MBS service and the identity of the second MRB configured by the source base station, the second mapping relationship includes a mapping relationship between the QoS flow of the target MBS service and the identity of the first MRB configured by the target base station, and the second mapping relationship is transmitted from the target base station to the source base station;
determining the mapping relationship between the identity of the first MRB and the identity of the second MRB based on the first mapping relationship and the second mapping relationship,
where determining the identity of the second MRB configured by the source base station for the QoS flow of the target MBS service based on the identity of the first MRB configured by the target base station for the QoS flow of the target MBS service includes:
   determining the identity of the second MRB configured by the source base station for the QoS flow of the target MBS service based on the determined mapping relationship and the identity of the first MRB configured by the target base station for the QoS flow of the target MBS service.

An embodiment of the present application further provides a method for transmitting a report applied to a source base station, the method including:
indicating a mapping relationship between an identity of a first multicast broadcast system radio bearer (MRB) configured by a target base station for quality of service (QoS) flow of a target multicast broadcast system (MBS) service and an identity of a second MRB configured by a source base station for the QoS flow of the target MBS service to a terminal device;
where the mapping relationship between the identity of the first MRB and the identity of the second MRB is used for indicating the terminal device to determine, based on the identity of the first MRB configured by the target base station for the QoS flow of the target MBS service, the identity of the second MRB configured by the source base station for the QoS flow of the target MBS service, and transmit a packet data convergence protocol (PDCP) status report for the QoS flow of the target MBS service to the target base station through a PDCP entity corresponding to the identity of the second MRB.

In an embodiment, the indicating the mapping relationship between the identity of the first MRB configured by the target base station for the QoS flow of the target MBS service and the identity of the second MRB configured by the source base station for the QoS flow of the target MBS service includes:
receiving the mapping relationship between the identity of the first MRB and the identity of the second MRB transmitted from the target base station; and
transmitting the mapping relationship between the identity of the first MRB and the identity of the second MRB to the terminal device.

In an embodiment, the indicating the mapping relationship between the identity of the first MRB configured by the target base station for the QoS flow of the target MBS service and the identity of the second MRB configured by the source base station for the QoS flow of the target MBS service includes:
receiving a second mapping relationship transmitted from the target base station; and
transmitting the second mapping relationship and a first mapping relationship to the terminal device;
where the first mapping relationship includes a mapping relationship between the QoS flow of the target MBS service and the identity of the second MRB, the second mapping relationship includes a mapping relationship between the QoS flow of the target MBS service and the identity of the first MRB, and the second mapping relationship and first mapping relationship are used for indicating the mapping relationship between the identity of the first MRB and the identity of the second MRB to the terminal device.

An embodiment of the present application further provides a terminal device including a memory, a transceiver, and a processor, where:
the memory is used for storing a computer program, the transceiver is used for transmitting and receiving data under control of the processor, and the processor is used for reading the computer program in the memory and executing the following operations:
determining an identity of a second multicast broadcast system radio bearer (MRB) configured by a source base station for quality of service (QoS) flow of a target multicast broadcast system (MBS) service based on an identity of a first MRB configured by a target base station for the QoS flow of the target MBS service; and
transmitting a packet data convergence protocol (PDCP) status report for the QoS flow of the target MBS service to the target base station through a PDCP entity corresponding to the identity of the second MRB.

In an embodiment of the terminal device, the transmitting the PDCP status report for the QoS flow of the target MBS service to the target base station through the PDCP entity corresponding to the identity of the second MRB includes:
receiving the QoS flow of the target MBS service through the PDCP entity corresponding to the identity of the second MRB; and
transmitting the PDCP status report generated by the PDCP entity corresponding to the identity of the second MRB to the target base station, where the PDCP status report includes QoS flow transmission information of the target MBS service.

In an embodiment of the terminal device, the operations further include:
receiving a mapping relationship, transmitted from the source base station, between the identity of the first MRB configured by the target base station and the identity of the second MRB configured by the source base station,
where determining the identity of the second MRB configured by the source base station for the QoS flow of the target MBS service based on the identity of the first MRB configured by the target base station for the QoS flow of the target MBS service includes:
   determining the identity of the second MRB configured by the source base station for the QoS flow of the target MBS service based on the mapping relationship and the identity of the first MRB configured by the target base station for the QoS flow of the target MBS service.

In an embodiment of the terminal device, the operations further include:
receiving a first mapping relationship and a second mapping relationship transmitted from the source base station, where the first mapping relationship includes a mapping relationship between the QoS flow of the target MBS service and the identity of the second MRB configured by the source base station, the second mapping relationship includes a mapping relationship between the QoS flow of the target MBS service and the identity of the first MRB configured by the target base station, and the second mapping relationship is transmitted from the target base station to the source base station;
determining the mapping relationship between the identity of the first MRB and the identity of the second MRB based on the first mapping relationship and the second mapping relationship,
where determining the identity of the second MRB configured by the source base station for the QoS flow of the target MBS service based on the identity of the first MRB configured by the target base station for the QoS flow of the target MBS service includes:
   determining the identity of the second MRB configured by the source base station for the QoS flow of the target MBS service based on the determined mapping relationship and the identity of the first MRB configured by the target base station for the QoS flow of the target MBS service.

An embodiment of the present application further provides a source base station including a memory, a transceiver, and a processor, where:
the memory is used for storing a computer program, the transceiver is used for transmitting and receiving data under control of the processor, and the processor is used for reading the computer program in the memory and executing the following operations:
indicating a mapping relationship between an identity of a first multicast broadcast system radio bearer (MRB) configured by a target base station for quality of service (QoS) flow of a target multicast broadcast system (MBS) service and an identity of a second MRB configured by a source base station for the QoS flow of the target MBS service to a terminal device;
where the mapping relationship between the identity of the first MRB and the identity of the second MRB is used for indicating the terminal device to determine, based on the identity of the first MRB configured by the target base station for the QoS flow of the target MBS service, the identity of the second MRB configured by the source base station for the QoS flow of the target MBS service, and transmit a packet data convergence protocol (PDCP) status report for the QoS flow of the target MBS service to the target base station through a PDCP entity corresponding to the identity of the second MRB.

In an embodiment of the source base station, the indicating the mapping relationship between the identity of the first MRB configured by the target base station for QoS flow of the target MBS service and the identity of the second MRB configured by the source base station for the QoS flow of the target MBS service includes:
receiving the mapping relationship between the identity of the first MRB and the identity of the second MRB transmitted from the target base station; and
transmitting the mapping relationship between the identity of the first MRB and the identity of the second MRB to the terminal device.

In an embodiment of the source base station, the indicating the mapping relationship between the identity of the first MRB configured by the target base station for the QoS flow of the target MBS service and the identity of the second MRB configured by the source base station for the QoS flow of the target MBS service includes:
receiving a second mapping relationship transmitted from the target base station; and
transmitting the second mapping relationship and a first mapping relationship to the terminal device;
where the first mapping relationship includes a mapping relationship between the QoS flow of the target MBS service and the identity of the second MRB, the second mapping relationship includes a mapping relationship between the QoS flow of the target MBS service and the identity of the first MRB, and the second mapping relationship and the first mapping relationship are used for indicating the mapping relationship between the identity of the first MRB and the identity of the second MRB to the terminal device.

An embodiment of the present application further provides an apparatus for transmitting a report including:
a determining module, used for determining an identity of a second multicast broadcast system radio bearer (MRB) configured by a source base station for quality of service (QoS) flow of a target multicast broadcast system (MBS) service based on an identity of a first MRB configured by a target base station for the QoS flow of the target MBS service; and
a transmitting module, used for transmitting a packet data convergence protocol (PDCP) status report for the QoS flow of the target MBS service to the target base station through a PDCP entity corresponding to the identity of the second MRB.

In an embodiment of the apparatus for transmitting the report, the transmitting module, used for transmitting the PDCP status report for the QoS flow of the target MBS service to the target base station through the PDCP entity corresponding to the identity of the second MRB, includes:
the transmitting module, used for receiving the QoS flow of the target MBS service through the PDCP entity corresponding to the identity of the second MRB; and
the transmitting module, used for transmitting the PDCP status report generated by the PDCP entity corresponding to the identity of the second MRB to the target base station, where the PDCP status report includes QoS flow transmission information of the target MBS service.

In an embodiment, the apparatus for transmitting the report further includes:
a first receiving module, used for receiving a mapping relationship, transmitted from the source base station, between the identity of the first MRB configured by the target base station and the identity of the second MRB configured by the source base station; and
the determining module, used for determining the identity of the second MRB configured by the source base station for the QoS flow of the target MBS service based on the identity of the first MRB configured by the target base station for the QoS flow of the target MBS service, includes:
   the determining module, used for determining the identity of the second MRB configured by the source base station for the QoS flow of the target MBS service based on the mapping relationship and the identity of the first MRB configured by the target base station for the QoS flow of the target MBS service.

In an embodiment, the apparatus for transmitting the report further includes:
a second receiving module, used for receiving a first mapping relationship and a second mapping relationship transmitted from the source base station, where the first mapping relationship includes a mapping relationship between the QoS flow of the target MBS service and the identity of the second MRB configured by the source base station, the second mapping relationship includes a mapping relationship between the QoS flow of the target MBS service and the identity of the first MRB configured by the target base station, and the second mapping relationship is transmitted from the target base station to the source base station; and
the determining module, further used for determining the mapping relationship between the identity of the first MRB and the identity of the second MRB based on the first mapping relationship and the second mapping relationship;
the determining module, used for determining the identity of the second MRB configured by the source base station for the QoS flow of the target MBS service based on the identity of the first MRB configured by the target base station for the QoS flow of the target MBS service, includes:
   the determining module, used for determining the identity of the second MRB configured by the source base station for the QoS flow of the target MBS service based on the determined mapping relationship and the identity of the first MRB configured by the target base station for the QoS flow of the target MBS service.

An embodiment of the present application further provides an apparatus for transmitting a report including:
an indicating module, used for indicating a mapping relationship between an identity of a first multicast broadcast system radio bearer (MRB) configured by a target base station for quality of service (QoS) flow of a target multicast broadcast system (MBS) service and an identity of a second MRB configured by a source base station for the QoS flow of the target MBS service to a terminal device;
where the mapping relationship between the identity of the first MRB and the identity of the second MRB is used for indicating the terminal device to determine, based on the identity of the first MRB configured by the target base station for the QoS flow of the target MBS service, the identity of the second MRB configured by the source base station for the QoS flow of the target MBS service, and transmit a packet data convergence protocol (PDCP) status report for the QoS flow of the target MBS service to the target base station through a PDCP entity corresponding to the identity of the second MRB.

In an embodiment of the apparatus for transmitting the report, the indicating module, used for indicating the mapping relationship between the identity of the first MRB configured by the target base station for the QoS flow of the target MBS service and the identity of the second MRB configured by the source base station for the QoS flow of the target MBS service, includes:
the indicating module, used for receiving the mapping relationship between the identity of the first MRB and the identity of the second MRB transmitted from the target base station; and
the indicating module, used for transmitting the mapping relationship between the identity of the first MRB and the identity of the second MRB to the terminal device.

In an embodiment of the apparatus for transmitting the report, the indicating module, used for indicating the mapping relationship between the identity of the first MRB configured by the target base station for the QoS flow of the target MBS service and the identity of the second MRB configured by the source base station for the QoS flow of the target MBS service, includes:
the indicating module, used for receiving a second mapping relationship transmitted from the target base station; and
the indicating module, used for transmitting the second mapping relationship and a first mapping relationship to the terminal device;
where the first mapping relationship includes a mapping relationship between the QoS flow of the target MBS service and the identity of the second MRB, the second mapping relationship includes a mapping relationship between the QoS flow of the target MBS service and the identity of the first MRB, and the second mapping relationship and first mapping relationship are used for indicating the mapping relationship between the identity of the first MRB and the identity of the second MRB to the terminal device.

An embodiment of the present application further provides a processor-readable storage medium storing a computer program, where the computer program is used for causing a processor to perform the steps of the method for transmitting the report described above.

In the methods and apparatuses for transmitting the report, the terminal, the base station, and the storage medium provided in embodiments of the present application, the identity of the second MRB configured by the source base station for the QoS flow of the MBS service is determined based on the identity of the first MRB configured by the target base station for the same QoS flow of the MBS service, the PDCP entity corresponding to the identity of the second MRB is continued to be used, i.e., the PDCP entity established for the second MRB of the source base station before handover is continued to be used, and the PDCP status report for the QoS flow of the target MBS service is transmitted to the target base station, avoiding triggering the release and establishment of the PDCP entity corresponding to the second MRB when handing over to the target base station, and ensuring lossless transmission based on the PDCP status report and the reliability of data transmission.

### BRIEF DESCRIPTION OF THE DRAWINGS

In order to more clearly illustrate the solutions of the embodiments according to the present application, the accompanying drawings used in the description for the embodiments are briefly introduced below. It should be noted that the drawings in the following description are only some embodiments of the present application. For those of ordinary skill in the art, other drawings may be obtained according to these drawings without creative effort.
FIG. 1 is a first schematic flow chart of a method for transmitting a report according to an embodiment of the present application;
FIG. 2 is a second schematic flow chart of a method for transmitting a report according to an embodiment of the present application;
FIG. 3 is a third schematic flow chart of a method for transmitting a report according to an embodiment of the present application;
FIG. 4 is a fourth schematic flow chart of a method for transmitting a report according to an embodiment of the present application;
FIG. 5 is a schematic structural diagram of a terminal device according to an embodiment of the present application;
FIG. 6 is a schematic structural diagram of a source base station according to an embodiment of the present application;
FIG. 7 is a first schematic structural diagram of an apparatus for transmitting a report according to an embodiment of the present application; and
FIG. 8 is a second schematic structural diagram of an apparatus for transmitting a report according to an embodiment of the present application.

### DETAILED DESCRIPTION

In the embodiments of the present application, the term "and/or" describes the association relationship of the associated objects, indicating that there may be three types of relationships. E.g., A and/or B may represent three situations: A exists alone, A and B exist simultaneously, and B exists alone. The character "/" generally indicates that the associated objects are in an "or" relationship.

The term "multiple" in the embodiments of the present application refers to two or more, and other quantifiers are similar to it.

The following provides a clear and complete description for the solutions in the embodiments of the present application in conjunction with the accompanying drawings. The described embodiments are only a part of the embodiments of the present application and not all of them. Based on the embodiments in the present application, all other embodiments obtained by those of ordinary skill in the art without creative labor fall within the scope of protection in the present application.

Embodiments of the present application provide methods and apparatuses for transmitting a report to ensure lossless transmission based on a packet data convergence protocol (PDCP) status report and ensure the reliability of data transmission.

The method and apparatus are based on the same conception. As the principle of solving problems by the method and apparatus is similar, the implementation of the apparatus and method may refer to each other, and the repetition is omitted.

The solutions provided in the embodiments of the present application may be applicable to various systems, especially 5G systems. For example, the applicable systems may be the global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), global interoperability for microwave access (WiMAX) system, 5G new radio (NR) system, etc. These various systems include terminal devices and network devices. The system may also include a core network component, such as the evolved packet system (EPS), 5G system (5GS), etc.

The following contents are introduced first.

### (1) Multicast broadcast system radio bearer (MBS radio bearer, MRB) identity;

In a radio communication system, there is a scenario where multiple user equipments (UEs) request for the same downlink service data. For scenario as such, to minimize radio resource consumption, a multicast and broadcast mechanism has been proposed, allowing a network to use specific radio resources to transmit a single downlink data, while multiple UEs receive the downlink data simultaneously. Contrariwise, traditional downlink data that may only be received by one UE is referred to as a unicast mechanism. The part of a radio communication system that supports multicast and broadcast is referred to as a multicast broadcast system (MBS).

In a communication system, different data have different quality of service (QoS) requirements, and a UE may receive packets with different QoS requirements simultaneously. Packets with the same QoS requirements form a QoS flow, which is identified by a QoS flow ID (QFI). In terms of air interface transmission, to schedule differently, the radio access network (RAN) may configure multiple radio bearers to carry these QoS flows. Each of the radio bearers has its own configuration information and is uniquely identified by the radio bearer identity. The RAN node informs the UE of these radio bearer identities and corresponding configuration information through air interface signaling.

When UE hands over between two RAN nodes, due to changes in channel environment, the configuration of radio bearers also needs to be adaptively changed. The target RAN node for handing over may use radio bearer identity to inform UE which configuration of the radio bearer needs to be changed. The multicast mechanism is no exception. Its service data is transmitted through MRB, and the RAN node also informs the UE of identity and corresponding configuration information of the MRB through air interface signaling. The identity of MRB is referred to as an MRB ID.

In the multicast mechanism, for management and data security considerations, when multiple UEs are connected to the same RAN node and receive the same multicast service data flow, the RAN node must instruct all UEs to establish an MRB with identical identity and configuration for the same service data flow. That is, the MRB ID is global under the RAN node and is valid for all UEs receiving the MBS service. However, according to the related art, MRB IDs are independently assigned by each of the RAN nodes, so different RAN nodes may assign different MRB IDs for the same service data flow.

### (2) PDCP status report after handover;

PDCP is an air protocol layer that, when transmitting data, RAN nodes and UEs establish a PDCP entity for each of the radio bearers to process the transmitted data. After handover, the UE must release the old data radio bearer (DRB) and establish a new DRB, resulting in UE releasing the old PDCP entity and establishing a new PDCP entity. At this point, the PDCP status report is unavailable, resulting in the inability to ensure lossless transmission of user data through this method.

DRB is only used for a single UE, and the target base station may simply assign the same DRB ID to the UE to enable lossless transmission based on PDCP status report during handover.

The MBS service transmission uses MRB. Different from that DRB may only be used for a single UE, the MBS service borne by MRB may be received by multiple UEs. Therefore, before a UE performs handover, the corresponding MBS service may have been transmitted in the target base station for a period of time, and the MRB ID used may be different from the MRB ID used in the source base station. When this UE hands over to the target base station, it may only use the existing MRB (whose ID is different from the MRB ID in the source base station) to receive MBS service.

In case that different RAN nodes establish different MRB identities for the same QoS flow of MBS session, the base station and UE trigger the release and establishment of the PDCP entity when handing over to the target cell, and the traditional lossless transmission mechanism based on PDCP status report in unicast scenario is unable to work, which leads to a defect of data loss. To overcome the defect above, embodiments of the present application provide methods and apparatuses for transmitting a report, a terminal device, a base station, and a storage medium to effectively ensure lossless transmission based on PDCP status report and improve the reliability of data transmission.

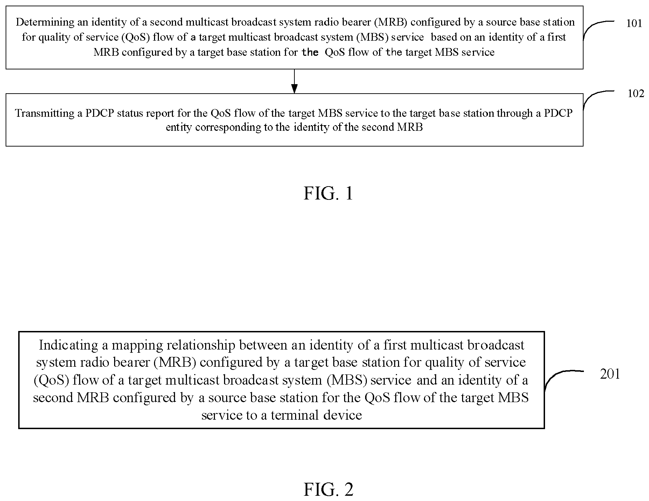

FIG. 1 is a first schematic flow chart of a method for transmitting a report according to an embodiment of the present application. As shown in FIG. 1, an embodiment of the present application provides a method for transmitting a report, which may be performed by a terminal device, such as a mobile phone, etc. The method includes the following steps.

Step 101: determining an identity of a second multicast broadcast system radio bearer (MRB) configured by a source base station for quality of service (QoS) flow of a target multicast broadcast system (MBS) service based on an identity of a first MRB configured by a target base station for the QoS flow of the target MBS service.

In an embodiment of the present application, the identity of the first MRB established by the terminal device for the QoS flow of the target MBS service after handover to the target base station may be different from the identity of the second MRB for the QoS flow of the target MBS service in the source base station, which leads to the terminal device having to release the old DRB and establish a new DRB, thereby causing data loss due to the need for the terminal device to establish a new packet data convergence protocol (PDCP) entity. To overcome the above defect, after determining the identity of the first MRB configured by the target base station for the QoS flow of the target MBS service, the terminal device may find the identity of the second MRB corresponding to the identity of the first MRB. The second MRB is the MRB configured by the source base station for the QoS flow of the target MBS service, and then the terminal device may continue to use the PDCP entity for the second MRB of the source base station for the QoS flow of the target MBS service, i.e., the PDCP entity corresponding to the identity of the second MRB.

Step 102: transmitting a PDCP status report for the QoS flow of the target MBS service to the target base station through a PDCP entity corresponding to the identity of the second MRB.

In an embodiment of the present application, the terminal device may determine to continue to use the PDCP entity configured by the source base station corresponding to the QoS flow of the target MBS service, ensuring the normal operation of the lossless transmission mechanism based on PDCP status report and ensuring the reliability of data transmission.

In an embodiment of the present application, the terminal device may continue to use, for the corresponding first MRB in the target cell, the PDCP entity configured by the source base station for the QoS flow of the target MBS service in target base station, based on the mapping relationship between the MRB ID (identity of the second MRB) corresponding to the MBS QoS flow (QoS flow of the target MBS service) of the MBS session in a source cell and the MRB ID (identity of the first MRB) corresponding to the same MBS QoS flow in the target cell, avoiding the triggering of the release and establishment of the PDCP entity corresponding to the MRB when handing over to the target cell, and achieving lossless transmission of the multicast service.

In an embodiment of the present application, for the QoS flow of the target MBS service, the identities of the radio bearers used to bear the QoS flow of the target MBS service before and after the handover of the terminal device are associated. Therefore, during the handover, the target base station may instruct the UE to continue using the PDCP entity before the handover, without releasing the old PDCP entity and establishing a new PDCP entity. Furthermore, after the UE completes the handover, the PDCP entity on the UE side may report a PDCP status report to the target base station, to inform the PDCP entity on the target base station side of which downlink PDCP packets have been successfully received before the handover, and which downlink PDCP packets have not been successfully received. The PDCP entity on the target base station side may perform targeted PDCP retransmission based on the status report, ensuring lossless transmission of user data.

In the method for transmitting the report provided in the embodiments of the present application, the identity of the second MRB configured by the source base station for the QoS flow of the MBS service is determined based on the identity of the first MRB configured by the target base station for the same QoS flow of the MBS service, the PDCP entity corresponding to the identity of the second MRB is continued to be used, i.e., the PDCP entity established for the second MRB of the source base station before the handover is continued to be used, and the PDCP status report for the QoS flow of the target MBS service is transmitted to the target base station, avoiding triggering the release and establishment of the PDCP entity corresponding to the second MRB when handing over to the target base station, and ensuring lossless transmission based on the PDCP status report and the reliability of data transmission.

In an embodiment, the transmitting the PDCP status report for the QoS flow of the target MBS service to the target base station through the PDCP entity corresponding to the identity of the second MRB includes:
receiving the QoS flow of the target MBS service through the PDCP entity corresponding to the identity of the second MRB; and
transmitting the PDCP status report generated by the PDCP entity corresponding to the identity of the second MRB to the target base station, where the PDCP status report includes QoS flow transmission information of the target MBS service.

In an embodiment, before the handover, i.e., the UE maintains the connection with the source base station, the UE may receive the QoS flow of the target MBS service through the PDCP entity corresponding to the identity of the second MRB configured by the source base station; after the handover of the UE, the UE may continue to use the PDCP entity before the handover to transmit a PDCP status report for the QoS flow of the target MBS service to the target base station. That is, the PDCP entity on the UE side may report a PDCP status report to the target base station to inform the PDCP entity of the target base station of which downlink PDCP packets have been successfully received before the handover, and which downlink PDCP packets have not been successfully received yet. The PDCP entity on the target base station side may perform targeted PDCP retransmission based on the status report, to ensure lossless transmission of user data.

In an embodiment, the method further includes:
receiving a mapping relationship,transmitted from the source base station, between the identity of the first MRB configured by the target base station and the identity of the second MRB configured by the source base station,
where determining the identity of the second MRB configured by the source base station for the QoS flow of the target MBS service based on the identity of the first MRB configured by the target base station for the QoS flow of the target MBS service includes:
   determining the identity of the second MRB configured by the source base station for the QoS flow of the target MBS service based on the mapping relationship and the identity of the first MRB configured by the target base station for the QoS flow of the target MBS service.

In an embodiment, when handover occurs, a corresponding relationship between the MRB ID (identity of the second MRB) for the MBS QoS flow (QoS flow of the target MBS service) of the MBS session in the source cell and the corresponding MRB ID (identity of the first MRB) for the same MBS QoS flow in the target cell may be indicated in the configuration of the target base station.

The terminal device may receive, before transmission, the mapping relationship between the identity of the first MRB configured by the target base station and the identity of the second MRB configured by the source base station forwarded by the source base station, and determine the identity of the second MRB corresponding to the identity of the first MRB based on the mapping relationship, and then determine the PDCP entity to continue using.

After receiving the mapping relationship between the identity of the first MRB configured by the target base station and the identity of the second MRB configured by the source base station, the terminal device may use the mapping relationship and the identity of the first MRB configured by the target base station for the QoS flow of the target MBS service to determine the identity of the second MRB configured by the source base station for the QoS flow of the target MBS service.

In an embodiment, the method further includes:
receiving a first mapping relationship and a second mapping relationship transmitted from the source base station, where the first mapping relationship includes a mapping relationship between the QoS flow of the target MBS service and the identity of the second MRB configured by the source base station, the second mapping relationship includes a mapping relationship between the QoS flow of the target MBS service and the identity of the first MRB configured by the target base station, and the second mapping relationship is transmitted from the target base station to the source base station;
determining the mapping relationship between the identity of the first MRB and the identity of the second MRB based on the first mapping relationship and the second mapping relationship,
where determining the identity of the second MRB configured by the source base station for the QoS flow of the target MBS service based on the identity of the first MRB configured by the target base station for the QoS flow of the target MBS service includes:
   determining the identity of the second MRB configured by the source base station for the QoS flow of the target MBS service based on the determined mapping relationship and the identity of the first MRB configured by the target base station for the QoS flow of the target MBS service.

In an embodiment, in a handover procedure, UE may determine the corresponding relationship between the corresponding MRB ID (identity of the second MRB) for the MBS QoS flow (QoS flow of the target MBS service) of the MBS session in the source cell and the corresponding MRB ID (identity of the first MRB) for the same MBS QoS flow in the target cell, based on the received first mapping relationship (mapping relationship between QoS flow of the target MBS service and identity of the second MRB) and the second mapping relationship (mapping relationship between QoS flow of the target MBS service and identity of the first MRB).

The terminal device may receive, in advance, the first mapping relationship transmitted from the source base station before transmission, and then access to the source base station and receive MBS service data through the corresponding MRB in the source cell; after the terminal device hands over to the target base station, the source base station may receive the second mapping relationship transmitted from the target base station, and the terminal device may receive the second mapping relationship forwarded by the source base station from the target base station; and the terminal device may determine, based on the first mapping relationship and the second mapping relationship, the mapping relationship between the identity of the first MRB and the identity of the second MRB, and determine, based on the mapping relationship between the identity of the first MRB and the identity of the second MRB, the identity of the second MRB corresponding to the identity of the first MRB, and then determine the PDCP entity that may continue to be used.

After receiving the mapping relationship between the identity of the first MRB configured by the target base station and the identity of the second MRB configured by the source base station, the terminal device may use the mapping relationship and the identity of the first MRB configured by the target base station for the QoS flow of the target MBS service to determine the identity of the second MRB configured by the source base station for the QoS flow of the target MBS service.

In the method for transmitting the report provided in the embodiments of the present application, the identity of the second MRB configured by the source base station for the QoS flow of the MBS service is determined based on the identity of the first MRB configured by the target base station for the same QoS flow of the MBS service, the PDCP entity corresponding to the identity of the second MRB is continued to be used, i.e., the PDCP entity established for the second MRB of the source base station before handover is continued to be used, and the PDCP status report for the QoS flow of the target MBS service is transmitted to the target base station, avoiding triggering the release and establishment of the PDCP entity corresponding to the second MRB when handing over to the target base station, and ensuring lossless transmission based on the PDCP status report and the reliability of data transmission.

FIG. 2 is a second schematic flow chart of a method for transmitting a report according to an embodiment of the present application. As shown in FIG. 2, an embodiment of the present application provides a method for transmitting a report applied to a source base station, the method including:
step 201, indicating a mapping relationship between an identity of a first multicast broadcast system radio bearer (MRB) configured by a target base station for quality of service (QoS) flow of a target multicast broadcast system (MBS) service and an identity of a second MRB configured by a source base station for the QoS flow of the target MBS service to a terminal device;
where the mapping relationship between the identity of the first MRB and the identity of the second MRB is used for indicating the terminal device to determine, based on the identity of the first MRB configured by the target base station for the QoS flow of the target MBS service, the identity of the second MRB configured by the source base station for the QoS flow of the target MBS service, and transmit a packet data convergence protocol (PDCP) status report for the QoS flow of the target MBS service to the target base station through a PDCP entity corresponding to the identity of the second MRB.

In an embodiment of the present application, the identity of the first MRB established by the terminal device for the QoS flow of the target MBS service after handover to the target base station may be different from the identity of the second MRB for the QoS flow of the target MBS service in the source base station, which leads to the terminal device having to release the old DRB and establish a new DRB, thereby causing data loss due to the need for the terminal device to establish a new PDCP entity. To overcome the above defect, the source base station indicates the mapping relationship between the identity of the first MRB and the identity of the second MRB to the terminal device, and then the terminal device may find the identity of the second MRB corresponding to the identity of the first MRB after determining the identity of the first MRB configured by the target base station for the QoS flow of the target MBS service. The second MRB is the MRB configured by the source base station for the QoS flow of the target MBS service, and then the terminal device may continue to use the PDCP entity for the second MRB of the source base station for the QoS flow of the target MBS service, i.e., the PDCP entity corresponding to the identity of the second MRB. In an embodiment of the present application, the terminal device determines to continue to use the source base station as the PDCP entity corresponding to the QoS flow of the target MBS service, ensuring the normal operation of the lossless transmission mechanism based on PDCP status report and ensuring the reliability of data transmission.

In an embodiment, the source base station may transmit the above mapping relationship to the terminal device, so that the terminal device may continue to use, for the corresponding MRB in the target cell, the PDCP entity configured by the source base station for the QoS flow of the target MBS service in the target base station, based on the corresponding relationship (target mapping relationship) between the corresponding MRB ID (identity of the second MRB) for the MBS QoS flow (QoS flow of the target MBS service) of the MBS session in the source cell and the corresponding MRB ID (identity of the first MRB) for the same MBS QoS flow in the target cell, avoiding the triggering of the release and establishment of the PDCP entity corresponding to the MRB when handing over to the target cell, and achieving lossless transmission of the multicast service.

In an embodiment of the present application, for the QoS flow of the target MBS service, the identities of the radio bearers used to bear the QoS flow of the target MBS service before and after the handover of the terminal device are associated. Therefore, during the handover, the target base station may instruct the UE to continue using the PDCP entity before the handover, without releasing the old PDCP entity and establishing a new PDCP entity. Furthermore, after the UE completes the handover, the PDCP entity on the UE side may report a PDCP status report to the target base station, to inform the PDCP entity on the target base station side of which downlink PDCP packets have been successfully received before the handover, and which downlink PDCP packets have not been successfully received. The PDCP entity on the target base station side may perform targeted PDCP retransmission based on the status report, ensuring lossless transmission of user data.

In the method for transmitting the report provided in the embodiments of the present application, the mapping relationship between the identity of the first MRB and the identity of the second MRB is indicated to the terminal device, the terminal device determines the identity of the second MRB configured by the source base station for the QoS flow of the MBS service based on the identity of the first MRB configured by the target base station for the same QoS flow of the MBS service, and then continues to use the PDCP entity corresponding to the identity of the second MRB, i.e., the PDCP entity established for the second MRB of the source base station before the handover, and the PDCP status report for the QoS flow of the target MBS service is transmitted to the target base station, avoiding triggering the release and establishment of the PDCP entity corresponding to the second MRB when handing over to the target base station, and ensuring lossless transmission based on the PDCP status report and the reliability of data transmission.

In an embodiment, the indicating the mapping relationship between the identity of the first MRB configured by the target base station for the QoS flow of the target MBS service and the identity of the second MRB configured by the source base station for the QoS flow of the target MBS service to the terminal device includes:
receiving the mapping relationship between the identity of the first MRB and the identity of the second MRB transmitted from the target base station; and
transmitting the mapping relationship between the identity of the first MRB and the identity of the second MRB to the terminal device.

The source base station may first receive the mapping relationship between the identity of the first MRB and the identity of the second MRB transmitted from the target base station through an Xn interface; after receiving the mapping relationship between the identity of the first MRB and the identity of the second MRB, the source base station may forward the mapping relationship to the terminal device.

In an embodiment, the indicating the mapping relationship between the identity of the first MRB configured by the target base station for the QoS flow of the target MBS service and the identity of the second MRB configured by the source base station for the QoS flow of the target MBS service to the terminal device includes:
receiving a second mapping relationship transmitted from the target base station; and
transmitting the second mapping relationship and a first mapping relationship to the terminal device;
where the first mapping relationship includes a mapping relationship between the QoS flow of the target MBS service and the identity of the second MRB, the second mapping relationship includes a mapping relationship between the QoS flow of the target MBS service and the identity of the first MRB, and the second mapping relationship and the first mapping relationship are used for indicating the mapping relationship between the identity of the first MRB and the identity of the second MRB to the terminal device.

In an embodiment, the source base station may transmit the first mapping relationship and the second mapping relationship to the terminal device, and then the terminal device may determine the mapping relationship between the identity of the first MRB and the identity of the second MRB, and then continue to use, for the corresponding MRB in the target cell, the PDCP entity configured by the source base station for the QoS flow of the target MBS service in the target base station, based on the mapping relationship between the MRB ID (identity of the second MRB) corresponding to the MBS QoS flow (QoS flow of the target MBS service) of the MBS session in the source cell and the MRB ID (identity of the first MRB) corresponding to the same MBS QoS flow in the target cell, avoiding the triggering of the release and establishment of the PDCP entity corresponding to the MRB when handing over to the target cell, and achieving lossless transmission of the multicast service.

The source base station first receives the second mapping relationship transmitted from the target base station through the Xn interface; after receiving the second mapping relationship, the source base station may forward the second mapping relationship to the terminal device.

The source base station may establish an MRB (corresponding to the identity of the second MRB) for the QoS flow of the target MBS service in the MBS session, and then use the MRB to transmit MBS service data through an air interface; furthermore, the source base station may transmit the first mapping relationship to the terminal device, and the terminal device may access the source base station and receive MBS service data through the corresponding MRB in the source cell; after the terminal device hands over to the target base station, the source base station may receive the second mapping relationship transmitted from the target base station and forward the second mapping relationship to the terminal device, and the terminal device may receive the second mapping relationship forwarded by the source base station from the target base station.

The terminal device then determines the mapping relationship between the identity of the first MRB and the identity of the second MRB based on the first mapping relationship and the second mapping relationship, determines the identity of the second MRB corresponding to the identity of the first MRB based on the mapping relationship, and determines the PDCP entity that may continue to be used.

In the method for transmitting the report provided in the embodiments of the present application, the mapping relationship between the identity of the first MRB and the identity of the second MRB is indicated to the terminal device, the terminal device determines the identity of the second MRB configured by the source base station for the QoS flow of the MBS service based on the identity of the first MRB configured by the target base station for the same QoS flow of the MBS service, and then continues to use the PDCP entity corresponding to the identity of the second MRB, i.e., the PDCP entity established for the second MRB of the source base station before the handover, and the PDCP status report for the QoS flow of the target MBS service is transmitted to the target base station, avoiding triggering the release and establishment of the PDCP entity corresponding to the second MRB when handing over to the target base station, and ensuring lossless transmission based on the PDCP status report and the reliability of data transmission.

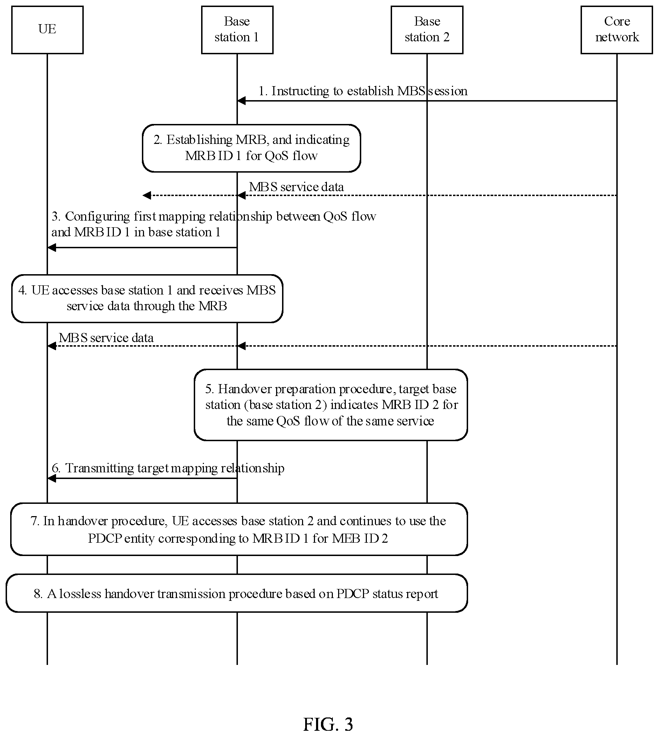

FIG. 3 is a third schematic flow chart of a method for transmitting a report according to an embodiment of the present application. As shown in FIG. 3, an embodiment of the present application provides a method for transmitting a report that may indicate, in the configuration of the target base station, the target mapping relationship between the corresponding identity of the second MRB for the QoS flow of the target MBS service in the source cell and the corresponding identity of the first MRB in the target cell. The method includes the following steps:
step 1: a core network instructs base station 1 (a source base station) to establish an MBS session;
step 2: the base station 1 establishes an MRB for the QoS flow of a target MBS service in the MBS session, which may be identified with MRB ID 1 (the identity of the second MRB); afterwards, the base station 1 begins to use this MRB to transmit MBS service data through an air interface;
step 3: the base station 1 configures an MBS session, and a mapping relationship between a QoS flow identity for the target MBS service and the MRB to UE;
step 4: UE accesses the base station 1 and receives the MBS service data through the aforementioned MRB;
step 5: at a certain moment, due to the movement of UE and other reasons, the base station 1 decides to hand over UE to a base station 2, and thus initiates a handover preparation procedure to the base station 2; a target base station (base station 2) allocates MRB for the QoS flow of the same target MBS service and specifies MRB ID 2 (identity of the first MRB); the target base station (base station 2) transmits the target mapping relationship between MRB ID 2 and MRB ID 1 corresponding to the QoS flow of the target MBS service to the source base station (base station 1) through an Xn interface;
step 6: the base station 1 transmits the target mapping relationship transparently to UE;
step 7: based on the instruction of the network, UE performs a handover from the base station 1 to the base station 2, determines that the QoS flow of the same target MBS service is mapped to the MRB ID 2 in the target base station, and continues to use the PDCP entity for the MRB ID 1 to receive data in the target base station;
step 8: UE performs a lossless handover transmission procedure based on a PDCP status report, and reports the PDCP data reception status on MRB ID 1 in the source base station as the status of MRB ID 2 to the target base station through the PDCP status report.

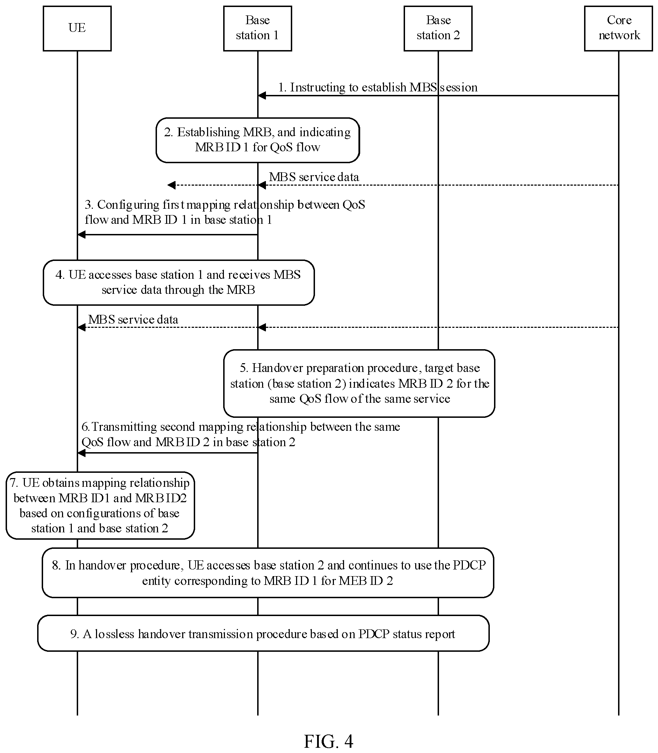

FIG. 4 is a fourth schematic flow chart of a method for transmitting a report according to an embodiment of the present application. As shown in FIG. 4, an embodiment of the present application provides a method for transmitting a report, in which UE may determine the target mapping relationship between the corresponding identity of the second MRB for the QoS flow of the target MBS service in the source cell and the corresponding identity of the first MRB in the target cell based on the received first mapping relationship and the second mapping relationship. The method includes the following steps:
step 1: a core network instructs base station 1 (a source base station) to establish an MBS session;
step 2: the base station 1 establishes an MRB for the QoS flow of a target MBS service in the MBS session, which may be identified with MRB ID 1 (the identity of the second MRB); afterwards, the base station 1 begins to use this MRB to transmit MBS service data through an air interface;
step 3: the base station 1 configures an MBS session and a first mapping relationship between a QoS flow identity for the target MBS service and the MRB to UE;
step 4: UE accesses the base station 1 and receives the MBS service data through the aforementioned MRB;
step 5: at a certain moment, due to the movement of UE and other reasons, the base station 1 decides to hand over UE to a base station 2, and thus initiates a handover preparation procedure to the base station 2; a target base station (base station 2) allocates MRB for the QoS flow of the same target MBS service and specifies MRB ID 2 (identity of the first MRB); the target base station (base station 2) transmits a second mapping relationship between the QoS flow of the target MBS service and an MRB ID 2 to the source base station (base station 1) through an Xn interface;
step 6: as a relay, the base station 1 transmits the MBS session and the second mapping relationship between the QoS flow of the target MBS service and the MRB ID 2 to UE through an RRC message;
step 7: UE obtains the mapping relationship between the MRB ID1 and the MRB ID2 based on the configurations of the base station 1 and the base station 2;
step 8: based on the instruction of the network, UE performs a handover from the base station 1 to the base station 2, determines that the QoS flow of the same target MBS service is mapped to the MRB ID 2 in the target base station, and continues to use the PDCP entity for the MRB ID 1 to receive data in the target base station;
step 9: UE performs a lossless handover transmission procedure based on a PDCP status report, and reports the PDCP data reception status on MRB ID 1 in the source base station as the status of MRB ID 2 to the target base station through the PDCP status report.

In the method for transmitting the report provided in the embodiments of the present application, the identity of the second MRB configured by the source base station for the QoS flow of the MBS service is determined based on the identity of the first MRB configured by the target base station for the same QoS flow of the MBS service, the PDCP entity corresponding to the identity of the second MRB is continued to be used, i.e., the PDCP entity established for the second MRB of the source base station before handover is continued to be used, and the PDCP status report for the QoS flow of the target MBS service is transmitted to the target base station, avoiding triggering the release and establishment of the PDCP entity corresponding to the second MRB when handing over to the target base station, and ensuring lossless transmission based on the PDCP status report and the reliability of data transmission.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session-initiated protocol (SIP) phone, a wireless local loop (WLL) station, a personal digital assistant (PDA) and other devices. A wireless terminal device may also be called a system, a subscriber unit, a subscriber station, a mobile station, a mobile platform, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), or may be a node B in a wide-band code division multiple access (WCDMA), or may be an evolutional NodeB (eNB or e-Node B) in a long term evolution (LTE) system, or may be a 5G gNB in 5G network architecture (next generation system), or may be a home evolved node B (HeNB), a relay node, a femto, or a pico, etc., which is not limited in the embodiments of the present application. In some network structures, the network device may include a centralized unit (CU) node and a distributed unit (DU) node, and the centralized unit and the distributed unit may be geographically separated.

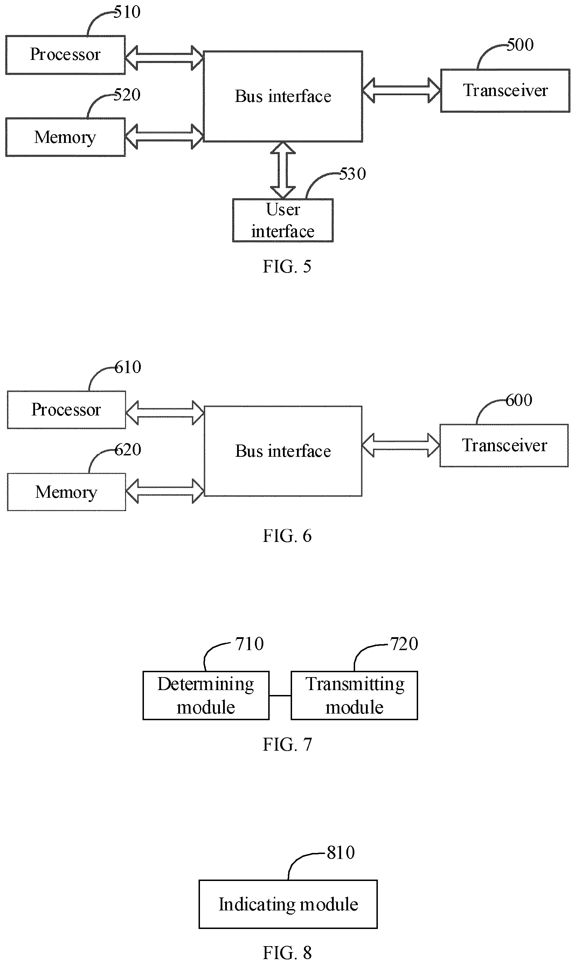

FIG. 5 is a schematic structural diagram of a terminal device according to an embodiment of the present application. As shown in FIG. 5, the terminal device includes a memory, a transceiver, and a processor:
the transceiver 500 is used for receiving and transmitting data under control of the processor 510.

In FIG. 5, the bus architecture may include any number of interconnected buses and bridges, one or more processors represented by processor 510 and various circuits of the memory represented by memory 520 are linked together. The bus architecture may also link together various other circuits such as peripherals, voltage regulators, and power management circuits, which are all well known in the art and therefore are not described further herein. The bus interface provides an interface. The transceiver 500 may include multiple elements, including a transmitter and a receiver, providing a unit for communicating with various other devices over transmission media, including wireless channels, wired channels, optical cables, and other transmission media. For different user equipments, a user interface 530 may also be an interface that is able to connect external and internal devices, including but not limited to keyboards, displays, speakers, microphones, joysticks, etc.

The processor 510 is responsible for managing the bus architecture and general processing, and the memory 520 may store data used by the processor 510 when performing operations.

In an embodiment, the processor 510 may be a central processing unit (CPU), an application specific integrated circuit (ASIC), a field-programmable gate array (FPGA) or a complex programmable logic device (CPLD), the processor may also adopt a multi-core architecture.

The processor is used for executing any one of the methods applied to the terminal device provided in the embodiments of the present application according to the obtained executable instructions by calling a computer program stored in the memory. The processor and memory may also be arranged physically separately.

The processor 510 is used for reading the computer program in the memory and executing the following operations:
determining an identity of a second multicast broadcast system radio bearer (MRB) configured by a source base station for quality of service (QoS) flow of a target multicast broadcast system (MBS) service based on an identity of a first MRB configured by a target base station for the QoS flow of the target MBS service; and
transmitting a packet data convergence protocol (PDCP) status report for the QoS flow of the target MBS service to the target base station through a PDCP entity corresponding to the identity of the second MRB.

The terminal device provided in the embodiments of the present application determines the identity of the second MRB configured by the source base station for the QoS flow of the MBS service based on the identity of the first MRB configured by the target base station for the same QoS flow of the MBS service, uses the PDCP entity corresponding to the identity of the second MRB, i.e., the PDCP entity established for the second MRB of the source base station before handover is continued to be used, and transmits the PDCP status report for the QoS flow of the target MBS service to the target base station, avoiding triggering the release and establishment of the PDCP entity corresponding to the second MRB when handing over to the target base station, and ensuring lossless transmission based on the PDCP status report and the reliability of data transmission.

In an embodiment, the processor 510 is further used for:
receiving the QoS flow of the target MBS service through the PDCP entity corresponding to the identity of the second MRB; and
transmitting the PDCP status report generated by the PDCP entity corresponding to the identity of the second MRB to the target base station, where the PDCP status report includes QoS flow transmission information of the target MBS service.

In an embodiment, the processor 510 is further used for:
receiving a mapping relationship, transmitted from the source base station, between the identity of the first MRB configured by the target base station and the identity of the second MRB configured by the source base station,
where determining the identity of the second MRB configured by the source base station for the QoS flow of the target MBS service based on the identity of the first MRB configured by the target base station for the QoS flow of the target MBS service includes:
   determining the identity of the second MRB configured by the source base station for the QoS flow of the target MBS service based on the mapping relationship and the identity of the first MRB configured by the target base station for the QoS flow of the target MBS service.

In an embodiment, the processor 510 is further used for:
receiving a first mapping relationship and a second mapping relationship transmitted from the source base station, where the first mapping relationship includes a mapping relationship between the QoS flow of the target MBS service and the identity of the second MRB configured by the source base station, the second mapping relationship includes a mapping relationship between the QoS flow of the target MBS service and the identity of the first MRB configured by the target base station, and the second mapping relationship is transmitted from the target base station to the source base station;
determining the mapping relationship between the identity of the first MRB and the identity of the second MRB based on the first mapping relationship and the second mapping relationship,
where determining the identity of the second MRB configured by the source base station for the QoS flow of the target MBS service based on the identity of the first MRB configured by the target base station for the QoS flow of the target MBS service includes:
   determining the identity of the second MRB configured by the source base station for the QoS flow of the target MBS service based on the determined mapping relationship and the identity of the first MRB configured by the target base station for the QoS flow of the target MBS service.

The terminal device provided in the embodiments of the present application determines the identity of the second MRB configured by the source base station for the QoS flow of the MBS service based on the identity of the first MRB configured by the target base station for the same QoS flow of the MBS service, uses the PDCP entity corresponding to the identity of the second MRB, i.e., the PDCP entity established for the second MRB of the source base station before handover is continued to be used, and transmits the PDCP status report for the QoS flow of the target MBS service to the target base station, avoiding triggering the release and establishment of the PDCP entity corresponding to the second MRB when handing over to the target base station, and ensuring lossless transmission based on the PDCP status report and the reliability of data transmission.

FIG. 6 is a schematic structural diagram of a source base station according to an embodiment of the present application. As shown in FIG. 6, the source base station includes a memory, a transceiver, and a processor:
the transceiver 600 is used for receiving and transmitting data under control of a processor 610.

In FIG. 6, the bus architecture may include any number of interconnected buses and bridges, one or more processors represented by processor 610 and various circuits of the memory represented by memory 620 are linked together. The bus architecture may also link together various other circuits such as peripherals, voltage regulators, and power management circuits, which are all well known in the art and therefore are not described further herein. The bus interface provides an interface. The transceiver 600 may include multiple elements, including a transmitter and a receiver, providing a unit for communicating with various other devices over transmission media, including wireless channels, wired channels, optical cables, and other transmission media. The processor 610 is responsible for managing the bus architecture and general processing, and the memory 620 may store data used by the processor 610 when performing operations.

The processor 610 may be a central processing unit (CPU), an application specific integrated circuit (ASIC), a field-programmable gate array (FPGA) or a complex programmable logic device (CPLD), the processor may also adopt a multi-core architecture.

The processor 610 is used for reading the computer program in the memory and executing the following operations:
indicating a mapping relationship between an identity of a first multicast broadcast system radio bearer (MRB) configured by a target base station for quality of service (QoS) flow of a target multicast broadcast system (MBS) service and an identity of a second MRB configured by a source base station for the QoS flow of the target MBS service to a terminal device,
where the mapping relationship between the identity of the first MRB and the identity of the second MRB is used for indicating the terminal device to determine, based on the identity of the first MRB configured by the target base station for the QoS flow of the target MBS service, the identity of the second MRB configured by the source base station for the QoS flow of the target MBS service, and transmit a packet data convergence protocol (PDCP) status report for the QoS flow of the target MBS service to the target base station through a PDCP entity corresponding to the identity of the second MRB.

The source base station provided in the embodiments of the present application indicates the mapping relationship between the identity of the first MRB and the identity of the second MRB to the terminal device, and then the terminal device determines the identity of the second MRB configured by the source base station for the QoS flow of the MBS service based on the identity of the first MRB configured by the target base station for the same QoS flow of the MBS service, and then continues to use the PDCP entity corresponding to the identity of the second MRB, i.e., the PDCP entity established for the second MRB of the source base station before handover, and the PDCP status report for the QoS flow of the target MBS service is transmitted to the target base station, avoiding triggering the release and establishment of the PDCP entity corresponding to the second MRB when handing over to the target base station, and ensuring lossless transmission based on the PDCP status report and the reliability of data transmission.

The processor 610 is further used for:
receiving the mapping relationship between the identity of the first MRB and the identity of the second MRB transmitted from the target base station; and
transmitting the mapping relationship between the identity of the first MRB and the identity of the second MRB to the terminal device.

The processor 610 is further used for:
receiving a second mapping relationship transmitted from the target base station; and
transmitting the second mapping relationship and a first mapping relationship to the terminal device;
where the first mapping relationship includes a mapping relationship between the QoS flow of the target MBS service and the identity of the second MRB, the second mapping relationship includes a mapping relationship between the QoS flow of the target MBS service and the identity of the first MRB, and the second mapping relationship and first mapping relationship are used for indicating the mapping relationship between the identity of the first MRB and the identity of the second MRB to the terminal device.

The source base station provided in the embodiments of the present application indicates the mapping relationship between the identity of the first MRB and the identity of the second MRB to the terminal device, and then the terminal device determines the identity of the second MRB configured by the source base station for the QoS flow of the MBS service based on the identity of the first MRB configured by the target base station for the same QoS flow of the MBS service, and then continues to use the PDCP entity corresponding to the identity of the second MRB, i.e., the PDCP entity established for the second MRB of the source base station before handover, and the PDCP status report for the QoS flow of the target MBS service is transmitted to the target base station, avoiding triggering the release and establishment of the PDCP entity corresponding to the second MRB when handing over to the target base station, and ensuring lossless transmission based on the PDCP status report and the reliability of data transmission.

It should be noted that the terminal device or the source base station provided in the embodiments of the present application may achieve all the method steps implemented in the above method embodiments and achieve the same technical effect. Therefore, the same parts and beneficial effects as in the method embodiments of the present application are not elaborated in detail.

FIG. 7 is a first schematic structural diagram of an apparatus for transmitting a report according to an embodiment of the present application. As shown in FIG. 7, the apparatus for transmitting the report includes a determining module 710 and a transmitting module 720:
the determining module 710 is used for determining an identity of a second multicast broadcast system radio bearer (MRB) configured by a source base station for quality of service (QoS) flow of a target multicast broadcast system (MBS) service based on an identity of a first MRB configured by a target base station for the QoS flow of the target MBS service; and
the transmitting module 720 is used for transmitting a packet data convergence protocol (PDCP) status report for the QoS flow of the target MBS service to the target base station through a PDCP entity corresponding to the identity of the second MRB.

In the apparatus for transmitting the report provided in the embodiments of the present application, the identity of the second MRB configured by the source base station for the QoS flow of the MBS service is determined based on the identity of the first MRB configured by the target base station for the same QoS flow of the MBS service, the PDCP entity corresponding to the identity of the second MRB is continued to be used, i.e., the PDCP entity established for the second MRB of the source base station before handover is continued to be used, and the PDCP status report for the QoS flow of the target MBS service is transmitted to the target base station, avoiding triggering the release and establishment of the PDCP entity corresponding to the second MRB when handing over to the target base station, and ensuring lossless transmission based on the PDCP status report and the reliability of data transmission.

In an embodiment, the transmitting module 720 is used for transmitting the PDCP status report for the QoS flow of the target MBS service to the target base station through the PDCP entity corresponding to the identity of the second MRB, including:
the transmitting module 720 is used for receiving the QoS flow of the target MBS service through the PDCP entity corresponding to the identity of the second MRB; and
the transmitting module 720 is used for transmitting the PDCP status report generated by the PDCP entity corresponding to the identity of the second MRB to the target base station, where the PDCP status report includes QoS flow transmission information of the target MBS service.

In an embodiment, the apparatus further includes:
a first receiving module, used for receiving a mapping relationship, transmitted from the source base station, between the identity of the first MRB configured by the target base station and the identity of the second MRB configured by the source base station; and
the determining module 710 is used for used for determining the identity of the second MRB configured by the source base station for the QoS flow of the target MBS service based on the identity of the first MRB configured by the target base station for the QoS flow of the target MBS service, includes:
   the determining module 710, used for determining the identity of the second MRB configured by the source base station for the QoS flow of the target MBS service based on the mapping relationship and the identity of the first MRB configured by the target base station for the QoS flow of the target MBS service.

In an embodiment, the apparatus further includes:
a second receiving module, used for receiving a first mapping relationship and a second mapping relationship transmitted from the source base station, where the first mapping relationship includes a mapping relationship between the QoS flow of the target MBS service and the identity of the second MRB configured by the source base station, the second mapping relationship includes a mapping relationship between the QoS flow of the target MBS service and the identity of the first MRB configured by the target base station, and the second mapping relationship is transmitted from the target base station to the source base station; and
the determining module 710, further used for determining the mapping relationship between the identity of the first MRB and the identity of the second MRB based on the first mapping relationship and the second mapping relationship;
the determining module 710 is used for used for determining the identity of the second MRB configured by the source base station for the QoS flow of the target MBS service based on the identity of the first MRB configured by the target base station for the QoS flow of the target MBS service, includes:
   the determining module 710 is used for determining the identity of the second MRB configured by the source base station for the QoS flow of the target MBS service based on the determined mapping relationship and the identity of the first MRB configured by the target base station for the QoS flow of the target MBS service.

In the apparatus for transmitting the report provided in the embodiments of the present application, the identity of the second MRB configured by the source base station for the QoS flow of the MBS service is determined based on the identity of the first MRB configured by the target base station for the same QoS flow of the MBS service, the PDCP entity corresponding to the identity of the second MRB is continued to be used, i.e., the PDCP entity established for the second MRB of the source base station before handover is continued to be used, and the PDCP status report for the QoS flow of the target MBS service is transmitted to the target base station, avoiding triggering the release and establishment of the PDCP entity corresponding to the second MRB when handing over to the target base station, and ensuring lossless transmission based on the PDCP status report and the reliability of data transmission.

The apparatus for transmitting the report provided in the embodiments of the present application may achieve all the method steps implemented in the above method embodiments applied to the terminal device, and may achieve the same technical effect. Therefore, the same parts and beneficial effects as in the method embodiments in the embodiments of the present application are not elaborated in detail.

It should be noted that, the division of units in the embodiments of the present application is schematic, and is only a logical function division, and other division manners may be performed in actual implementation. In an embodiment, the functional units in the various embodiments of the present application may be integrated into one processing unit/module, or each unit/module may exist alone physically, or two or more units/modules may be integrated into one unit/module. The aforementioned integrated unit/module may be implemented in the form of hardware or software functional unit.

FIG. 8 is a second schematic structural diagram of an apparatus for transmitting a report according to an embodiment of the present application. As shown in FIG. 8, the apparatus for transmitting the report includes: an indicating module 810, where:
the indicating module 810 is used for indicating a mapping relationship between an identity of a first multicast broadcast system radio bearer (MRB) configured by a target base station for quality of service (QoS) flow of a target multicast broadcast system (MBS) service and an identity of a second MRB configured by a source base station for the QoS flow of the target MBS service to a terminal device,
where the mapping relationship between the identity of the first MRB and the identity of the second MRB is used for indicating the terminal device to determine, based on the identity of the first MRB configured by the target base station for the QoS flow of the target MBS service, the identity of the second MRB configured by the source base station for the QoS flow of the target MBS service, and transmit a packet data convergence protocol (PDCP) status report for the QoS flow of the target MBS service to the target base station through a PDCP entity corresponding to the identity of the second MRB.

In the apparatus for transmitting the report provided in the embodiments of the present application, the mapping relationship between the identity of the first MRB and the identity of the second MRB is indicated to the terminal device, the terminal device determines the identity of the second MRB configured by the source base station for the QoS flow of the MBS service based on the identity of the first MRB configured by the target base station for the same QoS flow of the MBS service, and then continues to use the PDCP entity corresponding to the identity of the second MRB, i.e., the PDCP entity established for the second MRB of the source base station before the handover, and the PDCP status report for the QoS flow of the target MBS service is transmitted to the target base station, avoiding triggering the release and establishment of the PDCP entity corresponding to the second MRB when handing over to the target base station, and ensuring lossless transmission based on the PDCP status report and the reliability of data transmission.

In an embodiment, the indicating module 810 is used for indicating the mapping relationship between the identity of the first MRB configured by the target base station for the QoS flow of the target MBS service and the identity of the second MRB configured by the source base station for the QoS flow of the target MBS service, including:
the indicating module 810, used for receiving the mapping relationship between the identity of the first MRB and the identity of the second MRB transmitted from the target base station; and
the indicating module 810, used for transmitting the mapping relationship between the identity of the first MRB and the identity of the second MRB to the terminal device.

In an embodiment, the indicating module 810 is used for indicating the mapping relationship between the identity of the first MRB configured by the target base station for the QoS flow of the target MBS service and the identity of the second MRB configured by the source base station for the QoS flow of the target MBS service, including:
the indicating module 810, used for receiving a second mapping relationship transmitted from the target base station; and
the indicating module 810, used for transmitting the second mapping relationship and a first mapping relationship to the terminal device;
where the first mapping relationship includes a mapping relationship between the QoS flow of the target MBS service and the identity of the second MRB, the second mapping relationship includes a mapping relationship between the QoS flow of the target MBS service and the identity of the first MRB, and the second mapping relationship and first mapping relationship are used for indicating the mapping relationship between the identity of the first MRB and the identity of the second MRB to the terminal device.

In the apparatus for transmitting the report provided in the embodiments of the present application, the mapping relationship between the identity of the first MRB and the identity of the second MRB is indicated to the terminal device, the terminal device determines the identity of the second MRB configured by the source base station for the QoS flow of the MBS service based on the identity of the first MRB configured by the target base station for the same QoS flow of the MBS service, and then continues to use the PDCP entity corresponding to the identity of the second MRB, i.e., the PDCP entity established for the second MRB of the source base station before the handover, and the PDCP status report for the QoS flow of the target MBS service is transmitted to the target base station, avoiding triggering the release and establishment of the PDCP entity corresponding to the second MRB when handing over to the target base station, and ensuring lossless transmission based on the PDCP status report and the reliability of data transmission.

The apparatus for transmitting the report provided in the embodiments of the present application may achieve all the method steps implemented in the above method embodiments applied to the source base station, and may achieve the same technical effect. Therefore, the same parts and beneficial effects as in the method embodiments in the embodiments of the present application are not elaborated in detail.

It should be noted that the division of units in the above embodiments of the application is schematic and only serves as a logical functional division. In actual implementation, other divisions may be adopted. In addition, in various embodiments of the present application, each functional unit may be integrated into one processing unit, and each unit may also be provided physically separately, or two or more units may be integrated into one unit. The integrated unit mentioned above may be implemented in a form of hardware and also in a form of software functional unit.

In case that the integrated unit is implemented in the form of a software functional unit and sold or used as an independent product, it may be stored in a processor readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as USB flash disk, mobile hard disk, read-only memory (ROM), random access memory (RAM), magnetic disk, or optical disk.

It should be noted that the above apparatus provided in the embodiments of the present application may achieve all the method steps implemented in the above method embodiment and achieve the same technical effect. The same parts and beneficial effects as in the method embodiment are not elaborated in detail here.

An embodiment of the present application further provides a processor-readable storage medium storing a computer program for causing a processor to execute the methods provided in the aforementioned embodiments, the method including:
determining an identity of a second multicast broadcast system radio bearer (MRB) configured by a source base station for quality of service (QoS) flow of a target multicast broadcast system (MBS) service based on an identity of a first MRB configured by a target base station for the QoS flow of the target MBS service; and
transmitting a packet data convergence protocol (PDCP) status report for the QoS flow of the target MBS service to the target base station through a PDCP entity corresponding to the identity of the second MRB.
   Or,
indicating a mapping relationship between an identity of a first multicast broadcast system radio bearer (MRB) configured by a target base station for quality of service (QoS) flow of a target multicast broadcast system (MBS) service and an identity of a second MRB configured by a source base station for the QoS flow of the target MBS service to a terminal device,
where the mapping relationship between the identity of the first MRB and the identity of the second MRB is used for indicating the terminal device to determine, based on the identity of the first MRB configured by the target base station for the QoS flow of the target MBS service, the identity of the second MRB configured by the source base station for the QoS flow of the target MBS service, and transmit a packet data convergence protocol (PDCP) status report for the QoS flow of the target MBS service to the target base station through a PDCP entity corresponding to the identity of the second MRB.

It should be noted that, the processor-readable storage medium may be any available medium or data storage device that a processor may access, including but not limited to magnetic memory (for example, floppy disks, hard disks, magnetic tapes, magneto-optical disks (MO), etc.), optical memory (for example, CDs, DVDs, BDs, HVDs, etc.), and semiconductor memory (for example, ROM, EPROM, EEPROM, non-volatile memory (NAND FLASH), solid-state drive (SSD), etc.).

Those skilled in the art should understand that embodiments disclosed herein may be provided as methods, systems, or computer program products. Therefore, the present application may take a form of complete hardware embodiments, complete software embodiments, or embodiments combining software and hardware. Moreover, the present application may take a form of computer program products implemented on one or more computer available storage medium (including but not limited to disk storage, optical storage, etc.) containing computer available program codes.

The present application is described with reference to the flowcharts and/or block diagrams of the methods and devices (systems), and computer program product according to the embodiments of the present application. It should be understood that each process and/or box in the flowchart and/or block diagram, as well as the combination of processes and/or boxes in the flowchart and/or block diagram, may be implemented by computer executable instructions. These computer executable instructions may be provided to processors of general-purpose computers, specialized computers, embedded processors, or other programmable data processing devices to generate a machine, allowing instructions executed by processors of computers or other programmable data processing devices to generate devices for implementing functions specified in one or more steps of a flowchart or one or more blocks in a block diagram.

These processor executable instructions may also be stored in a processor readable memory that may guide computers or other programmable data processing devices to work in a specific way, causing the instructions stored in the processor readable memory to generate manufactures including an instruction device, the instruction device implementing the functions specified in one or more processes and/or blocks of a flowchart.

These processor executable instructions may also be loaded onto a computer or other programmable data processing device to perform a series of operational steps on the computer or other programmable device to generate computer-implemented processing. The instructions executed on the computer or other programmable device provide steps for implementing the functions specified in one or more processes and/or blocks of a flowchart.

Those skilled in the art may make various modifications and variations to the present application without departing from the scope of the present application. In this way, if these modifications and variations of the present application fall within the scope of the claims and their equivalent, the present application also intends to include these modifications and variations.

## Claims

1. A method for transmitting a report, applied to a terminal device, the method comprising:
determining an identity of a second multicast broadcast system radio bearer, MRB, configured by a source base station for quality of service, QoS, flow of a target multicast broadcast system, MBS, service based on an identity of a first MRB configured by a target base station for the QoS flow of the target MBS service; and
transmitting a packet data convergence protocol, PDCP, status report for the QoS flow of the target MBS service to the target base station through a PDCP entity corresponding to the identity of the second MRB.

2. The method of claim 1, wherein transmitting the PDCP status report for the QoS flow of the target MBS service to the target base station through the PDCP entity corresponding to the identity of the second MRB comprises:
receiving the QoS flow of the target MBS service through the PDCP entity corresponding to the identity of the second MRB; and
transmitting the PDCP status report generated by the PDCP entity corresponding to the identity of the second MRB to the target base station, wherein the PDCP status report comprises QoS flow transmission information of the target MBS service.

3. The method of claim 1 or 2, further comprising:
receiving a mapping relationship, transmitted from the source base station, between the identity of the first MRB configured by the target base station and the identity of the second MRB configured by the source base station,
wherein determining the identity of the second MRB configured by the source base station for the QoS flow of the target MBS service based on the identity of the first MRB configured by the target base station for the QoS flow of the target MBS service comprises:
determining the identity of the second MRB configured by the source base station for the QoS flow of the target MBS service based on the mapping relationship and the identity of the first MRB configured by the target base station for the QoS flow of the target MBS service.

4. The method of claim 1 or 2, further comprising:
receiving a first mapping relationship and a second mapping relationship transmitted from the source base station, wherein the first mapping relationship comprises a mapping relationship between the QoS flow of the target MBS service and the identity of the second MRB configured by the source base station, the second mapping relationship comprises a mapping relationship between the QoS flow of the target MBS service and the identity of the first MRB configured by the target base station, and the second mapping relationship is transmitted from the target base station to the source base station; and
determining the mapping relationship between the identity of the first MRB and the identity of the second MRB based on the first mapping relationship and the second mapping relationship,
wherein determining the identity of the second MRB configured by the source base station for the QoS flow of the target MBS service based on the identity of the first MRB configured by the target base station for the QoS flow of the target MBS service comprises:
determining the identity of the second MRB configured by the source base station for the QoS flow of the target MBS service based on the mapping relationship between the identity of the first MRB and the identity of the second MRB and the identity of the first MRB configured by the target base station for the QoS flow of the target MBS service.

5. A method for transmitting a report, applied to a source base station, wherein the method comprising:
indicating a mapping relationship between an identity of a first multicast broadcast system radio bearer, MRB, configured by a target base station for quality of service, QoS, flow of a target multicast broadcast system, MBS, service and an identity of a second MRB configured by a source base station for the QoS flow of the target MBS service to a terminal device,
wherein the mapping relationship between the identity of the first MRB and the identity of the second MRB is used for indicating the terminal device to determine, based on the identity of the first MRB configured by the target base station for the QoS flow of the target MBS service, the identity of the second MRB configured by the source base station for the QoS flow of the target MBS service, and transmit a packet data convergence protocol, PDCP, status report for the QoS flow of the target MBS service to the target base station through a PDCP entity corresponding to the identity of the second MRB.

6. The method of claim 5, wherein indicating the mapping relationship between the identity of the first MRB configured by the target base station for the QoS flow of the target MBS service and the identity of the second MRB configured by the source base station for the QoS flow of the target MBS service to the terminal device comprises:
receiving the mapping relationship between the identity of the first MRB and the identity of the second MRB transmitted from the target base station; and
transmitting the mapping relationship between the identity of the first MRB and the identity of the second MRB to the terminal device.

7. The method of claim 5, wherein indicating the mapping relationship between the identity of the first MRB configured by the target base station for the QoS flow of the target MBS service and the identity of the second MRB configured by the source base station for the QoS flow of the target MBS service to the terminal device comprises:
receiving a second mapping relationship transmitted from the target base station; and
transmitting the second mapping relationship and a first mapping relationship to the terminal device,
wherein the first mapping relationship comprises a mapping relationship between the QoS flow of the target MBS service and the identity of the second MRB, the second mapping relationship comprises a mapping relationship between the QoS flow of the target MBS service and the identity of the first MRB, and the second mapping relationship and the first mapping relationship are used for indicating the mapping relationship between the identity of the first MRB and the identity of the second MRB to the terminal device.

8. A terminal device, comprising a memory, a transceiver, and a processor,
wherein the memory is used for storing a computer program, the transceiver is used for transmitting and receiving data under control of the processor, and the processor is used for reading the computer program in the memory and executing the following operations:
determining an identity of a second multicast broadcast system radio bearer, MRB, configured by a source base station for quality of service, QoS, flow of a target multicast broadcast system, MBS, service based on an identity of a first MRB configured by a target base station for the QoS flow of the target MBS service; and
transmitting a packet data convergence protocol, PDCP, status report for the QoS flow of the target MBS service to the target base station through a PDCP entity corresponding to the identity of the second MRB.

9. The terminal device of claim 8, wherein transmitting the PDCP status report for the QoS flow of the target MBS service to the target base station through the PDCP entity corresponding to the identity of the second MRB comprises:
receiving the QoS flow of the target MBS service through the PDCP entity corresponding to the identity of the second MRB; and
transmitting the PDCP status report generated by the PDCP entity corresponding to the identity of the second MRB to the target base station, wherein the PDCP status report comprises QoS flow transmission information of the target MBS service.

10. The terminal device of claim 8 or 9, wherein the operations further comprise:
receiving a mapping relationship, transmitted from the source base station, between the identity of the first MRB configured by the target base station and the identity of the second MRB configured by the source base station,
wherein determining the identity of the second MRB configured by the source base station for the QoS flow of the target MBS service based on the identity of the first MRB configured by the target base station for the QoS flow of the target MBS service comprises:
determining the identity of the second MRB configured by the source base station for the QoS flow of the target MBS service based on the mapping relationship and the identity of the first MRB configured by the target base station for the QoS flow of the target MBS service.

11. The terminal device of claim 8 or 9, wherein the operations further comprise:
receiving a first mapping relationship and a second mapping relationship transmitted from the source base station, wherein the first mapping relationship comprises a mapping relationship between the QoS flow of the target MBS service and the identity of the second MRB configured by the source base station, the second mapping relationship comprises a mapping relationship between the QoS flow of the target MBS service and the identity of the first MRB configured by the target base station, and the second mapping relationship is transmitted from the target base station to the source base station; and
determining the mapping relationship between the identity of the first MRB and the identity of the second MRB based on the first mapping relationship and the second mapping relationship,
wherein determining the identity of the second MRB configured by the source base station for the QoS flow of the target MBS service based on the identity of the first MRB configured by the target base station for the QoS flow of the target MBS service comprises:
determining the identity of the second MRB configured by the source base station for the QoS flow of the target MBS service based on the mapping relationship between the identity of the first MRB and the identity of the second MRB and the identity of the first MRB configured by the target base station for the QoS flow of the target MBS service.

12. A base station, comprising a memory, a transceiver, and a processor,
wherein the memory is used for storing a computer program, the transceiver is used for transmitting and receiving data under control of the processor, and the processor is used for reading the computer program in the memory and executing the following operations:
indicating a mapping relationship between an identity of a first multicast broadcast system radio bearer, MRB, configured by a target base station for quality of service, QoS, flow of a target multicast broadcast system, MBS, service and an identity of a second MRB configured by a source base station for the QoS flow of the target MBS service to a terminal device,
wherein the mapping relationship between the identity of the first MRB and the identity of the second MRB is used for indicating the terminal device to determine, based on the identity of the first MRB configured by the target base station for the QoS flow of the target MBS service, the identity of the second MRB configured by the source base station for the QoS flow of the target MBS service, and transmit a packet data convergence protocol, PDCP, status report for the QoS flow of the target MBS service to the target base station through a PDCP entity corresponding to the identity of the second MRB.

13. An apparatus for transmitting a report, comprising:
a determining module, used for determining an identity of a second multicast broadcast system radio bearer, MRB, configured by a source base station for quality of service, QoS, flow of a target multicast broadcast system, MBS, service based on an identity of a first MRB configured by a target base station for the QoS flow of the target MBS service; and
a transmitting module, used for transmitting a packet data convergence protocol, PDCP, status report for the QoS flow of the target MBS service to the target base station through a PDCP entity corresponding to the identity of the second MRB.

14. The apparatus of claim 13, wherein the transmitting module, used for transmitting the PDCP status report for the QoS flow of the target MBS service to the target base station through the PDCP entity corresponding to the identity of the second MRB, comprises:
the transmitting module, used for receiving the QoS flow of the target MBS service through the PDCP entity corresponding to the identity of the second MRB; and
the transmitting module, used for transmitting the PDCP status report generated by the PDCP entity corresponding to the identity of the second MRB to the target base station, wherein the PDCP status report comprises QoS flow transmission information of the target MBS service.

15. The apparatus of claim 13 or 14, further comprising:
a first receiving module, used for receiving a mapping relationship, transmitted from the source base station, between the identity of the first MRB configured by the target base station and the identity of the second MRB configured by the source base station; and
the determining module, used for determining the identity of the second MRB configured by the source base station for the QoS flow of the target MBS service based on the identity of the first MRB configured by the target base station for the QoS flow of the target MBS service, comprises:
the determining module, used for determining the identity of the second MRB configured by the source base station for the QoS flow of the target MBS service based on the mapping relationship and the identity of the first MRB configured by the target base station for the QoS flow of the target MBS service.

16. The apparatus of claim 13 or 14, further comprising:
a second receiving module, used for receiving a first mapping relationship and a second mapping relationship transmitted from the source base station, wherein the first mapping relationship comprises a mapping relationship between the QoS flow of the target MBS service and the identity of the second MRB configured by the source base station, the second mapping relationship comprises a mapping relationship between the QoS flow of the target MBS service and the identity of the first MRB configured by the target base station, and the second mapping relationship is transmitted from the target base station to the source base station; and
the determining module, further used for determining the mapping relationship between the identity of the first MRB and the identity of the second MRB based on the first mapping relationship and the second mapping relationship;
the determining module, used for determining the identity of the second MRB configured by the source base station for the QoS flow of the target MBS service based on the identity of the first MRB configured by the target base station for the QoS flow of the target MBS service, comprises:
the determining module, used for determining the identity of the second MRB configured by the source base station for the QoS flow of the target MBS service based on the mapping relationship between the identity of the first MRB and the identity of the second MRB and the identity of the first MRB configured by the target base station for the QoS flow of the target MBS service.

17. An apparatus for transmitting a report, comprising:
an indicating module, used for indicating a mapping relationship between an identity of a first multicast broadcast system radio bearer, MRB, configured by a target base station for quality of service, QoS, flow of a target multicast broadcast system, MBS, service and an identity of a second MRB configured by a source base station for the QoS flow of the target MBS service to a terminal device,
wherein the mapping relationship between the identity of the first MRB and the identity of the second MRB is used for indicating the terminal device to determine, based on the identity of the first MRB configured by the target base station for the QoS flow of the target MBS service, the identity of the second MRB configured by the source base station for the QoS flow of the target MBS service, and transmit a packet data convergence protocol, PDCP, status report for the QoS flow of the target MBS service to the target base station through a PDCP entity corresponding to the identity of the second MRB.

18. The apparatus of claim 17, wherein the indicating module, used for indicating the mapping relationship between the identity of the first MRB configured by the target base station for the QoS flow of the target MBS service and the identity of the second MRB configured by the source base station for the QoS flow of the target MBS service, comprises:
the indicating module, used for receiving the mapping relationship between the identity of the first MRB and the identity of the second MRB transmitted from the target base station; and
the indicating module, used for transmitting the mapping relationship between the identity of the first MRB and the identity of the second MRB to the terminal device.

19. The apparatus of claim 17, wherein the indicating module, used for indicating the mapping relationship between the identity of the first MRB configured by the target base station for the QoS flow of the target MBS service and the identity of the second MRB configured by the source base station for the QoS flow of the target MBS service, comprises:
the indicating module, used for receiving a second mapping relationship transmitted from the target base station; and
the indicating module, used for transmitting the second mapping relationship and a first mapping relationship to the terminal device,
wherein the first mapping relationship comprises a mapping relationship between the QoS flow of the target MBS service and the identity of the second MRB, the second mapping relationship comprises a mapping relationship between the QoS flow of the target MBS service and the identity of the first MRB, and the second mapping relationship and first mapping relationship are used for indicating the mapping relationship between the identity of the first MRB and the identity of the second MRB to the terminal device.

20. A processor-readable storage medium, wherein the processor-readable storage medium stores a computer program for causing a processor to execute any one of the methods of claims 1 to 7.
